# FASCICULE DE BREVET EUROPEEN

(11) **EP 4 107 097 B1**
(45) Date de publication et mention de la délivrance du brevet: **03.04.2024**
(21) Numéro de dépôt: 21705569.8
(22) Date de dépôt: 22.02.2021
(51) Int. Cl.: B65G 47/14, B65G 51/03

(54) **INSTALLATION DE TRAITEMENT DE CAPSULES A PORTILLON PNEUMATIQUE**
KAPSELVERARBEITUNGSANLAGE MIT PNEUMATISCHEM TOR
CAPSULE PROCESSING PLANT WITH PNEUMATIC GATE

(30) Priorité: 21.02.2020 FR 2001772
(43) Date de publication de la demande: 28.12.2022
(73) Titulaire: SERAC Group, 72400 La Ferte Bernard (FR)
(72) Inventeur: BORCARD, Julien, 72110 SAINT GEORGES DU ROSAY (FR)
(74) Mandataire: Cabinet Boettcher
(86) Numéro de dépôt international: PCT/EP2021/054297
(87) Numéro de publication internationale: WO 2021/165526

(56) Documents cités:
- US-A- 3 210 124
- US-A- 4 573 830
- US-A1- 2007 212 174
- US-A1- 2007 287 119
- US-A1- 2012 273 693
- US-B2- 7 850 403

## Description

La présente invention concerne le domaine du conditionnement et plus particulièrement le bouchage de récipients.

### ARRIERE PLAN DE L'INVENTION

Il est connu de boucher des récipients en utilisant des éléments d'obturation tels que des capsules et des bouchons.

Les capsules (également appelées « opercules ») comprennent généralement une feuille métallique souple dont une face est recouverte d'une couche de matière fusible.

Une installation de thermoscellage comprend généralement un dispositif de transport des capsules jusqu'à la station de scellage où les capsules sont déposées sur les récipients. Le dispositif de transport comprend le plus souvent une glissière recevant à glissement deux portions opposées d'un bord périphérique de chaque capsule, et des buses de soufflage d'air selon une direction longitudinale de la glissière pour provoquer le déplacement des capsules le long de la glissière. US 2007/287119 A1 divulgue le préambule de la revendication 1.

Il est parfois nécessaire de stopper temporairement le flux de capsules dans une zone de la glissière, par exemple pour faire subir une opération de stérilisation ou de décontamination à une ou plusieurs capsules. On utilise généralement à cette fin un portillon mécanique qu'on déplace entre une position en saillie de la glissière et une position en retrait de la glissière. Cette solution présente cependant l'inconvénient que le portillon et la capsule viennent au contact l'un de l'autre, ce qui risque de détériorer le bord de la capsule et ce d'autant plus si la vitesse de la capsule est importante. En outre, si les capsules sont proches les unes des autres, il est nécessaire de ménager un espace entre deux capsules pour laisser au portillon le temps de venir en position en saillie sans risquer d'écraser l'une des capsules.

Les bouchons sont composés d'un polymère ou d'un métal. La géométrie d'un bouchon est un cylindre ouvert avec une base (appelée fond de bouchon) et une paroi annulaire ou bord périphérique (appelée chant du bouchon). Des inconvénients analogues à ceux ci-dessus peuvent également affecter l'approvisionnement des bouchons amenés par glissière.

### OBJET DE L'INVENTION

L'invention a notamment pour but de fournir un moyen pour stopper au moins un élément d'obturation circulant dans une glissière.

### RESUME DE L'INVENTION

A cet effet, on prévoit, selon l'invention un dispositif de transport d'éléments d'obturation de récipient ayant un bord périphérique, le dispositif comprenant une glissière ayant deux rebord longitudinaux opposés recevant à glissement deux portions opposées du bord périphérique de chaque élément d'obturation, et un moyen pour déplacer les éléments d'obturation le long de la glissière. Le dispositif comprend au moins une buse de soufflage transversal montée dans un trou d'un des rebords de la glissière pour éjecter un flux d'air vers le rebord opposé, la buse transversale étant associée à un élément de commande pour sélectivement autoriser ou interrompre l'alimentation en air de la buse de soufflage transversal. Ainsi, c'est un flux d'air transversal qui provoque l'arrêt de l'élément d'obturation, ce qui limite voire élimine les chocs et réduit donc le risque d'une détérioration des éléments d'obturation, et plus particulièrement une déformation du bord périphériques de ceux-ci.

Avantageusement, l'installation comprend au moins une buse d'aspiration débouchant dans la glissière pour aspirer une portion de l'élément d'obturation en regard, la buse d'aspiration étant associée à un élément de commande pour sélectivement autoriser ou interrompre l'alimentation en air de la buse d'aspiration.

La buse d'aspiration permet de maintenir l'élément d'obturation en limitant encore plus le risque d'une déformation de l'élément d'obturation. Ceci est particulièrement utile lorsque des éléments d'obturation s'accumulent contre l'élément d'obturation maintenu en position.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 représente une vue schématique en élévation, avec coupe partielle, d'une installation de traitement de capsules selon l'invention ;
[Fig. 2] la figure 2 représente une vue schématique, en coupe transversale selon l'axe II-II de la figure 1, d'un dispositif de transport de capsules selon l'invention ;

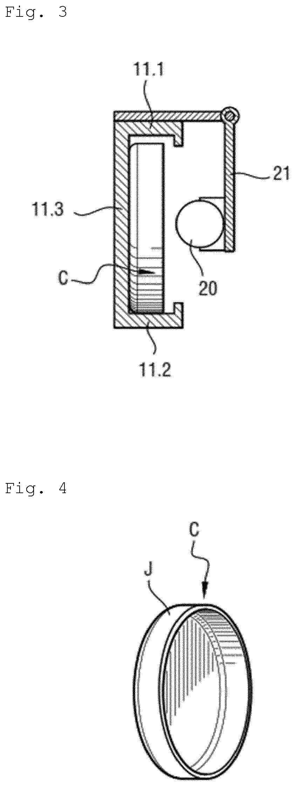

[Fig. 3] la figure 3 représente une vue schématique, en coupe transversale selon l'axe III-III de la figure 1, du dispositif de transport de capsules selon l'invention ;
[Fig. 4] la figure 4 représente une vue schématique en perspective d'une capsule.
[Fig. 5] la figure 5 représente une vue schématique en perspective d'un bouchon.

### DESCRIPTION DETAILLEE DE L'INVENTION

L'invention concerne le transport de capsules ou de bouchons et est ici décrite en relation avec une installation de traitement de capsules qui est destinée à être intégrée à une installation de remplissage et de bouchage de récipients non représentée. Le traitement est ici une décontamination mais l'invention est cependant applicable à d'autres type de traitement. Chaque capsule, désignée en C, est formée d'au moins une feuille métallique ayant une face interne recouverte d'une couche thermoscellable. Chaque capsule C a un bord périphérique annulaire formé d'une jupe J s'étendant en saillie de la face interne de la capsule C. A l'opposé de la face interne, la capsule C comprend une face externe portant ou pas un marquage.

En référence aux figures, l'installation de traitement selon l'invention comprend ici un bâti symbolisé en 1 sur lequel sont montés une enceinte de décontamination généralement désignée en 5 et un dispositif de transport de capsules généralement désigné en 10.

L'enceinte de décontamination 5 comprend par exemple une ou plusieurs buses de projection d'une solution chimique stérilisante, ou bien encore un ou plusieurs émetteurs d'un rayonnement stérilisant. L'enceinte de décontamination 5 définit ainsi une zone de traitement et possède une entrée 5.1 et une sortie 5.2.

Le dispositif de transport 10 comprend une glissière 11 ayant un rebord longitudinal supérieur 11.1 et un rebord longitudinal inférieur 11.2 opposés l'un à l'autre et agencés pour recevoir à glissement deux portions opposées de la jupe J de chaque capsule C. Entre les deux rebords 11.1, 11.2 s'étend une âme 11.3 contre laquelle s'étend la face externe des capsules C transportées. La glissière 11 est solidaire du bâti 1.

La glissière 11 est pourvue de buses de soufflage longitudinal 20 disposées le long de la glissière 11 pour éjecter un flux d'air selon une direction longitudinale de la glissière 11 de manière à déplacer les capsules C le long de la glissière 11. Les buses de soufflage longitudinal 20 assurent à la fois la mise en mouvement des capsules C mais aussi leur guidage. Chaque buse de soufflage longitudinal 20 est solidaire d'un support 21 articulé sur le rebord supérieur 11.1 de la glissière 11 pour être mobile entre une position d'utilisation dans laquelle la buse de soufflage longitudinal 20 est disposée en regard de l'âme 11.3 au voisinage d'un plan longitudinal médian 12 de la glissière 11 s'étendant entre les deux rebords 11.1, 11.2 perpendiculairement à l'âme 11.3 et une position escamotée dans laquelle la buse de soufflage longitudinal 20 est écartée de ce plan pour libérer l'accès à l'espace s'étendant entre les rebords 11.1, 11.2 par exemple pour des opérations de maintenance ou de nettoyage. Les buses de soufflage longitudinal 20 sont associées à un élément de commande, comme une servovalve, pour sélectivement autoriser ou interrompre l'alimentation en air des buses de soufflage transversal 20.

Le dispositif comprend également deux buses de soufflage transversal 30 montées chacune dans un trou 13.1, 13.2 d'un des rebords 11.1, 11.2 de la glissière 11 pour éjecter un flux d'air - vers le rebord 11.2, 11.1 opposé - perpendiculairement au plan longitudinal médian 12. Les trous 13.1, 13.2 s'étendent en regard l'un de l'autre. Les buses de soufflage transversal 30 sont associées à un élément de commande, comme une servovalve, pour sélectivement autoriser ou interrompre l'alimentation en air des buses de soufflage transversal 30.

Le dispositif comprend enfin au moins une buse d'aspiration 40 débouchant dans un trou du rebord 11.2 de la glissière 11 en amont du trou 13.2 par référence au sens de circulation des capsules C dans la glissière 11. La buse d'aspiration 40 est positionnée pour aspirer une portion de la jupe J de la capsule C se trouvant en regard. La buse d'aspiration 40 est reliée à une conduite sous vide via un élément de commande, comme une servovalve, pour sélectivement autoriser ou interrompre la mise en dépression de la buse d'aspiration 40.

La glissière 11 comprend un premier tronçon 11A s'étendant en amont de la zone de traitement jusqu'à l'entrée 5.1, un deuxième tronçon 11B s'étendant dans la zone de traitement depuis l'entrée 5.1 jusqu'à la sortie 5.2, et un troisième tronçon 11C s'étendant en aval de la zone de traitement depuis la sortie 5.2. Les buses de soufflage transversal 30 et la buse d'aspiration 40 sont montées sur le deuxième tronçon 11B et plus particulièrement au voisinage de la sortie 5.2 de l'enceinte de décontamination 5.

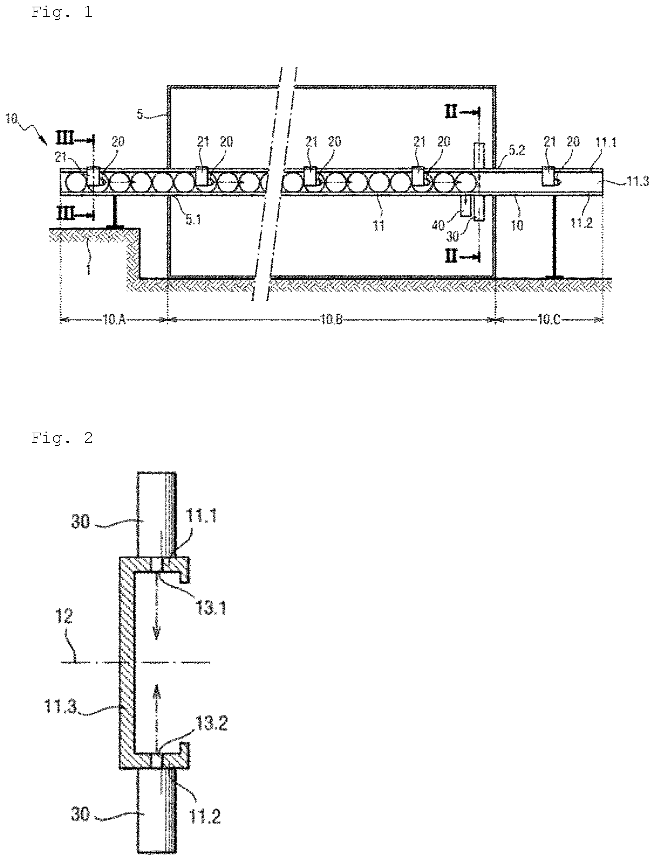

Les éléments de commande sont reliés à une unité électronique de commande conçue pour piloter les éléments de commande de manière à pouvoir arrêter le flux de capsules C dans l'enceinte de décontamination 5 en :
- alimentant les buses de soufflage transversal 30 pour arrêter une capsule C au voisinage de la sortie 5.2 ;
- mettant la buse d'aspiration 40 sous vide pour aspirer la portion de la jupe J de la capsule C qui a été arrêtée en regard de la buse d'aspiration 40, les capsules C du flux de capsules C s'accumulant derrière la capsule C dont la jupe J est aspirée ;
- coupant l'alimentation des buses de soufflage transversal 30 pour ne pas risquer d'abîmer la jupe J de la première capsule C arrêtée ;
- remettant la buse d'aspiration 40 à l'air ambiant une fois écoulée la durée nécessaire à la décontamination des capsules C se trouvant accumulées dans la zone de traitement (comme représenté à la figure 1) de sorte que les capsules se déplacent à nouveau par l'effet du flux d'air longitudinal.

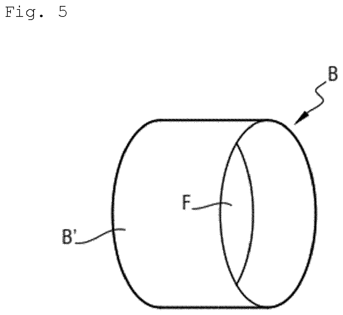

L'unité électronique de commande peut piloter également les éléments de commande des buses de soufflage longitudinal 20 pour interrompre leur alimentation en air lorsque le flux de capsules C est stoppé et le remettre lorsque les buses de soufflage transversal 30 et la buse d'aspiration ne sont plus alimentées. L'alimentation des buses de soufflage longitudinal peut être remis en place de manière décalée pour déplacer d'abord les capsules se trouvant au voisinage de la sortie 5.2 puis les précédentes de manière à espacer les capsules C les uns des autres. Lorsqu'il est seulement nécessaire de bloquer une capsule C pendant une durée suffisamment courte pour qu'il n'y ait pas d'accumulation de capsules C, l'unité électronique de commande alimente uniquement les buses de soufflage transversal 30, la buse d'aspiration 40 restant inactive. L'invention est bien entendu utilisable pour le transport de bouchons. Comme représenté sur la figure 5, chaque bouchon, désigné en B, a un bord annulaire B', appelé chant, s'étendant en saillie d'une face interne F du bouchon, appelée fond. Le chant B' du bouchon B a une surface externe cylindrique qui peut être pourvue de crantages ou autres formes géométriques en relief permettant une meilleure préhension du bouchon B qu'une surface lisse. Le chant B' a une surface interne qui peut être pourvue de gorges et de filets permettant l'application et le maintien du bouchon B sur son emballage.

L'installation de transport des bouchons B est sensiblement identique à celle décrite précédemment en relation avec les capsules C.

Bien entendu, l'invention n'est pas limitée au mode de réalisation décrit mais englobe toute variante entrant dans le champ de l'invention telle que définie par les revendications.

En particulier, l'installation peut avoir une structure différente de celle décrite.

La ou les buses d'aspiration peuvent être disposées ailleurs que sur un rebord de la glissière. La buse d'aspiration peut ainsi être par exemple positionnée pour déboucher dans un trou de l'âme de la glissière pour aspirer une portion de la face externe de l'élément d'obturation. Le dispositif de transport peut être dépourvu de buse d'aspiration.

L'installation peut comprendre un nombre différent de buses de soufflage et/ou d'aspiration. Ainsi, l'installation peut par exemple comprendre une unique buse de soufflage transversal, en particulier lorsqu'il n'y a pas d'accumulation des éléments d'obturation contre celui qui a été arrêté.

L'installation peut comprendre d'autres moyens de déplacement qu'une ou plusieurs buses de soufflage longitudinal. La glissière peut ainsi par exemple être inclinée pour permettre un déplacement gravitaire des capsules ou des bouchons.

Les buses de soufflage longitudinal peuvent être solidaire d'un même support et/ou le support des buses de soufflage longitudinal peuvent être fixes.

La buse d'aspiration 40 peut déboucher dans un trou d'un des rebords 11.1, 11.2 de la glissière 11 pour aspirer une portion du bord périphérique d'un élément d'obturation C, B se trouvant en regard.

La buse de soufflage longitudinal 20 peut être solidaire d'un support 21 articulé entre une position d'utilisation dans laquelle la buse de soufflage longitudinal 20 est disposée au voisinage d'un plan longitudinal 12 de la glissière 11 s'étendant entre les deux rebords 11.1, 11.2 et une position escamotée dans laquelle la buse de soufflage longitudinal 20 est écartée de ce plan longitudinal 12.

Le dispositif de transport peut être utilisé à d'autres fins que le traitement des capsules ou des bouchons.

## Revendications

1. Installation de traitement d'éléments d'obturation d'emballage (C, B) ayant un bord périphérique, l'installation comprenant une zone de traitement et un dispositif (10) de transport des éléments d'obturation d'emballage (C, B), le dispositif comprenant une glissière (11) ayant deux rebord longitudinaux (11.1, 11.2) opposés recevant à glissement deux portions opposées du bord périphérique de chaque élément d'obturation, et un moyen pour déplacer les éléments d'obturation le long de la glissière (11), **caractérisé en ce que** le dispositif (10) comprend au moins une buse de soufflage transversal (30) montée dans un trou (13.1, 13.2) d'un des rebords (11.1, 11.2) de la glissière pour éjecter un flux d'air vers le rebord (11.2, 11.1) opposé, la buse transversale étant associée à un élément de commande pour sélectivement autoriser ou interrompre l'alimentation en air de la buse de soufflage transversal (30) et **en ce que** la glissière (11) a un premier tronçon (11A) en amont de la zone de traitement, un deuxième tronçon (11B) dans la zone de traitement et un troisième tronçon (11C) en aval de la zone de traitement, la buse de soufflage transversal (30) étant montée sur le deuxième tronçon (11B).

2. Installation selon la revendication 1, comprenant deux buses de soufflage transversal (30) montées en regard l'une de l'autre.

3. Installation selon la revendication 1 ou 2, comprenant au moins une buse d'aspiration (40) débouchant dans la glissière (11) pour aspirer une portion de l'élément d'obturation (B, C) en regard, la buse d'aspiration (40) étant associée à un élément de commande pour sélectivement autoriser ou interrompre l'alimentation en air de la buse d'aspiration (40).

4. Installation selon la revendication 3, dans lequel la buse d'aspiration (40) débouche dans un trou d'un des rebords (11.1, 11.2) de la glissière (11) pour aspirer une portion du bord périphérique d'un élément d'obturation (C, B) se trouvant en regard.

5. Installation selon l'une quelconque des revendications précédentes, dans lequel le moyen de déplacement des éléments d'obturation (C, B) comprend au moins une buse de soufflage longitudinal (20) disposée le long de la glissière (11) pour éjecter un flux d'air selon une direction longitudinale de la glissière (11).

6. Installation selon revendication 5, dans lequel la buse de soufflage longitudinal (20) est solidaire d'un support (21) articulé entre une position d'utilisation dans laquelle la buse de soufflage longitudinal (20) est disposée au voisinage d'un plan longitudinal (12) de la glissière (11) s'étendant entre les deux rebords (11.1, 11.2) et une position escamotée dans laquelle la buse de soufflage longitudinal (20) est écartée de ce plan longitudinal (12).

7. Installation selon l'une quelconque des revendications précédentes, dans laquelle, la buse de soufflage transversal (30) s'étendant au voisinage d'une sortie (5.2) de la zone de traitement.

## Patentansprüche

1. Anlage zur Verarbeitung von Verpackungsverschlusselementen (C, B), die einen Umfangsrand haben, wobei die Anlage eine Verarbeitungszone und eine Transportvorrichtung (10) zum Transport der Verpackungsverschlusselemente (C, B) umfasst, wobei die Vorrichtung eine Gleitführung (11) umfasst, die zwei gegenüberliegende Längsränder (11.1, 11.2) hat, die zwei entgegengesetzte Abschnitte des Umfangsrandes jedes Verschlusselements gleitend aufnehmen, und Mittel zum Bewegen der Verschlusselemente entlang der Gleitführung (11), **dadurch gekennzeichnet, dass** die Vorrichtung (10) mindestens eine Querblasdüse (30) umfasst, die in einem Loch (13.1, 13.2) eines der Ränder (11.1, 11.2) der Gleitführung montiert ist, um einen Luftstrom in Richtung des gegenüberliegenden Randes auszustoßen, wobei die Querdüse mit einem Steuerelement verbunden ist, um selektiv die Luftversorgung der Querblasdüse (30) zu gestatten oder zu unterbrechen, und dass die Gleitführung (11) einen ersten Abschnitt (11A) stromaufwärts der Verarbeitungszone hat, einen zweiten Abschnitt (11B) in der Verarbeitungszone und einen dritten Abschnitt (11c) stromabwärts der Verarbeitungszone, wobei die Querblasdüse (30) an dem zweiten Abschnitt (11B) montiert ist.

2. Anlage nach Anspruch 1, umfassend zwei Querblasdüsen (30), die einander gegenüberliegend montiert sind.

3. Anlage nach Anspruch 1 oder 2, umfassend mindestens eine Saugdüse (40), die in die Gleitführung (11) mündet, um einen Abschnitt des gegenüberliegenden Verschlusselements (B, C) anzusaugen, wobei die Saugdüse (40) mit einem Steuerelement verbunden ist, um selektiv die Luftversorgung der Saugdüse (40) zu gestatten oder zu unterbrechen.

4. Anlage nach Anspruch 3, bei der die Saugdüse (40) in ein Loch eines der Ränder (11.1, 11.2) der Gleitführung (11) mündet, um einen Abschnitt des Umfangsrandes eines Verschlusselements (C, B), das sich gegenüber befindet, anzusaugen.

5. Anlage nach einem der vorhergehenden Ansprüche, bei der die Bewegungsmittel der Verschlusselemente (C, B) mindestens eine Längsblasdüse (20) umfassen, die entlang der Gleitführung (11) angeordnet ist, um einen Luftstrom in einer Längsrichtung der Gleitführung (11) auszustoßen.

6. Anlage nach Anspruch 5, bei der die Längsblasdüse (20) fest mit einem Träger (21) verbunden ist, der zwischen einer Gebrauchsposition, in der die Längsblasdüse (20) in der Nähe einer Längsebene (12) der Gleitführung (11) angeordnet ist, die sich zwischen den beiden Rändern (11.1, 11.2) erstreckt, und einer eingezogenen Position angelenkt ist, in der die Längsblasdüse (20) zu dieser Längsebene (12) beabstandet ist.

7. Anlage nach einem der vorhergehenden Ansprüche, bei der sich die Querblasdüse (30) in der Nähe eines Ausgangs (5.2) der Verarbeitungszone erstreckt.

## Claims

1. An installation for treating packaging closure elements (C, B) each having a peripheral edge, the installation comprising a treatment zone and a transport device (10) for transporting packaging closure elements (C, B), the device comprising both a slideway (11) having two opposite longitudinal flanges (11.1, 11.2) receiving in slidable manner two opposite portions of the peripheral edge of each closure element, and also movement means for moving the closure elements along the slideway (11), the installation being **characterized in that** the device (10) includes at least one transverse blow nozzle (30) mounted in a hole (13.1, 13.2) in one of the flanges (11.1, 11.2) of the slideway in order to eject a flow of air towards the opposite flange (11.2, 11.1), the transverse nozzle being associated with a control element for selectively allowing or interrupting air feed to the transverse blow nozzle (30), and **in that** the slideway (11) has a first segment (11A) upstream from the treatment zone, a second segment (11B) in the treatment zone, and a third segment (11C) downstream from the treatment zone, the transverse blow nozzle (30) being mounted on the second segment (11B).

2. An installation according to claim 1, including two transverse blow nozzles (30) mounted facing each other.

3. An installation according to claim 1 or claim 2, including at least one suction nozzle (40) opening out in the slideway (11) to hold a portion of a facing closure element (B, C), the suction nozzle (40) being associated with a control element for selectively allowing or interrupting suction feed to the suction nozzle (40).

4. An installation according to claim 3, wherein the suction nozzle (40) opens out in a hole in one of the flanges (11.1, 11.2) of the slideway (11) in order to hold a portion of the peripheral edge of a facing closure element (C, B).

5. An installation according to any preceding claim, wherein the movement means for moving the closure elements (C, B) comprise at least one longitudinal blow nozzle (20) arranged along the slideway (11) in order to eject a flow of air along a longitudinal direction of the slideway (11).

6. An installation according to claim 5, wherein the longitudinal blow nozzle (20) is secured to a support (21) that is hinged to move between an in-use position in which the longitudinal blow nozzle (20) is located in the vicinity of a longitudinal plane (12) of the slideway (11) extending between its two flanges (11.1, 11.2), and a retracted position in which the longitudinal blow nozzle (20) is located away from that longitudinal plane (12) .

7. An installation according to any preceding claim, wherein the transverse blow nozzle (30) extends in the vicinity of an outlet (5.2) from the treatment zone.
